# EUROPEAN PATENT SPECIFICATION

(11) **EP 3 268 940 B1**
(45) Date of publication and mention of the grant of the patent: **10.05.2023**
(21) Application number: 16708166.0
(22) Date of filing: 07.03.2016
(51) Int. Cl.: G07C 5/08

(54) **TELEMATICS CONTROL SYSTEM TRACKING AND MONITORING**
TELEMATIKSTEUERUNGSSYSTEMVERFOLGUNG UND -ÜBERWACHUNG
SUIVI ET SURVEILLANCE DE SYSTÈME DE COMMANDE TÉLÉMATIQUE

(30) Priority: 09.03.2015 GB 201503986
(43) Date of publication of application: 17.01.2018
(73) Proprietor: Jaguar Land Rover Limited, Coventry, Warwickshire CV3 4LF (GB)
(72) Inventor: BUSWELL, Deborah, Coventry Warwickshire CV3 4LF (GB); LOWE, Tony, Coventry Warwickshire CV3 4LF (GB); BURNETT, Mark, Coventry Warwickshire CV3 4LF (GB)
(74) Representative: Jaguar Land Rover Patents Department
(86) International application number: PCT/EP2016/054752
(87) International publication number: WO 2016/142324

(56) References cited:
- EP-A1- 2 404 791
- US-A1- 2004 198 466
- US-A1- 2009 224 869
- US-A1- 2010 120 373
- US-A1- 2012 193 981

## Description

### TECHNICAL FIELD

The present disclosure relates to a telematics control system for use in a vehicle and particularly, but not exclusively to a system that is operable in a logistics mode to transmit vehicle data to off-board the vehicle. Aspects of the invention relate to a system, to a method, and to a vehicle.

### BACKGROUND

The logistics of transporting finished vehicles from a manufacturing production line to a dealership where the vehicle will be sold gives rise to many problems. This is a particular issue when transporting vehicles on a global scale, including to different regions and markets. These problems may arise from inter alia a lack of timely and accurate recordation of information into a system database. Current systems rely on manual input which can be inefficient and unreliable. The information that is to be input may include a vehicle's current geographical location during transportation to a dealership, or details of pre-sale maintenance checks.

Examples of such problems that the above systems cause are as follows. Firstly, a problem that arises during transportation is the inability to determine accurately how much fuel is in a vehicle at a given point in time. This is important from, amongst other things, a tax perspective, when transporting vehicles globally. In addition, vehicle status issues may arise during transportation, such as batteries becoming flat and needing replacement or tyre pressures being too low. At present, this may go undetected and unreported, resulting in delays in providing a fully-functioning vehicle to the end user.

Also, if information relating to the geographical location of the vehicles is not entered into a system then this leads to inaccuracies in, and the inability to manage, the global inventory. This can lead to poor decisions being made regarding, for example, the volume of vehicles that need to be transported to a certain region. Current vehicles may have externally-fitted tracking devices (e.g. RFID tags); however, they are lost easily and are subject to both initial costs (e.g. tracking infrastructure) and ongoing costs (e.g. annual service charge).

Next, the present systems may lead to cash flow problems. This is because the points of revenue recognition (i.e. when revenues are realised) are different in different markets and for different brands. Since processes may be manual, non-standard, slow, complex and/or difficult to monitor, this can lead to delayed revenue realisation and hence can have a significant cost impact.

Current systems may also lead to a lack of compliance; for example, delays in notification by a dealer that a vehicle has arrived at a dealership, or that a vehicle has passed a particular check point (e.g. a port) during transportation. Different organisations may place varying degrees of importance on certain protocols which leads to these delays in notification of vehicle arrival or movement.

US2004/198466 A1 discloses A method of operating a telematics device includes a control unit communicating an ignition status of a vehicle to a wireless device. The wireless device detects the ignition status and determines if a low-power mode that cannot transmit data is available. If the low-power mode is available, the wireless device can communicate a low-power mode available signal to the control unit. Upon receipt of the low-power mode available signal, the control unit communicates a shutdown time indicating an amount of time to assume the low-power mode to the wireless device and enters a power-off status. The wireless device enters the low-power mode and monitors for a power-on condition.

EP2404791 A1 discloses an apparatus which does not set off a security alarm after a battery is removed by switching operational modes. The apparatus includes an internal power supply which is capable of supplying power to an acceleration sensor, and a CPU when an in-vehicle battery is unconnected to a vehicle, and switching means which selects an operational mode provided to an abnormality sensing apparatus. The plurality of operational modes includes a transportation mode, for use when transporting the vehicle from the factory to a sales location, in which the internal power supply is prohibited from being used even when the battery is not connected. The transporting mode is set as an operational mode in an initial state before the battery is first connected to the vehicle. When the battery is connected to the vehicle, in the mode, the operational mode switching means shifts to a normal mode in which abnormality sensing and warning operations are possible.

An aim of the present invention is to provide a system that addresses the problems associated with the prior art that are outlined above, whilst solving the technical challenges of implementing such a system in a way that does not adversely impact the charge of the vehicle battery even for journeys that could be months in duration.

### SUMMARY OF THE INVENTION

Aspects and embodiments of the invention provide a system, a method and a vehicle as claimed in the appended claims.

According to an aspect of the present invention, there is provided a telematics control system, or other system comprising the features outlined herein, for use in a vehicle and operable during a logistics stage of the vehicle from manufacture of the vehicle up to a time where the vehicle is ready to be used by an end user the system being operable during the logistics stage of the vehicle to determine whether to transmit vehicle data to off-board the vehicle. The vehicle includes a vehicle battery and one or more vehicle sensors. The system includes a system battery, wherein the system battery is arranged to power the system when the vehicle battery is not operably connected to the system. The system includes an input arranged to receive vehicle data from at least one of the one or more on-board vehicle sensors, a processor arranged to determine whether the vehicle battery is operably connected to the system, and an output arranged to transmit a wireless communications message indicative of the received vehicle data to off-board the vehicle. The system include a logistics activated mode in which it is operable to transmit communications messages and a logistics quiet mode in which it draws no power from the vehicle battery. In addition, during the logistics stage, the processor is operable to switch from the logistics quiet mode to the logistics activated mode when it determines that the vehicle battery is operably connected to the system in the event that the vehicle ignition is switched on. In the logistics activated mode the processor is operable to send the communications message from the output, so as to transmit vehicle data to off-board the vehicle. The system is arranged to operate in the logistics activated mode for a predetermined period after it is determined that the vehicle battery is not operably connected to the system, and/or after it is determined that the vehicle battery is not operably connected to the system, operate in the logistics activated mode for a period sufficient to ensure establishment of a communications connection.

The system of the presently claimed invention advantageously is operable throughout a logistics stage of the vehicle. In particular, the system advantageously includes a logistics mode, and is operable in the logistics mode during the logistics stage to provide the functionality of the present invention. The system remains operable during the logistics stage by utilising the occasions during this stage in which the vehicle ignition or vehicle engine is switched on to avoid draining the vehicle battery. The vehicle battery is automatically operably connect to the system in the event that the vehicle ignition is switched on. In these cases the system is operable to transmit messages indicative of vehicle data to off-board the vehicle without draining the vehicle battery power. This allows the current state of different vehicle-related features to be monitored and perhaps acted upon throughout the logistics stage.

Note that it is not the case that the system is operable in the logistics activated mode only when the vehicle ignition or vehicle engine is switched on, rather that the system is simply operable to switch from the logistics quiet mode to the logistics activated mode in such a case.

Note that when the engine of the vehicle is running this is charging the vehicle battery and also a rechargeable battery associated with the telematics control system that enables the telematics control system to complete its task of sending data off-vehicle even in the case where the vehicle is turned off and the vehicle battery disconnected prior to the telematics control system completing said task.

The input, processor and output may comprise an electronic control unit or one or more controllers. The electronic controller, or the one or more controllers may have, associated therewith, micro-processors programmed to execute the required functions. For example, the system may comprise a memory device in communication with the processor and having instructions stored therein. The processor may be arranged to access the memory device and execute the instructions stored therein such that it is operable to determine whether the vehicle battery is operably connected to the system. In this case the processor is also arranged to switch from the logistics quiet mode to the logistics activated mode when it determines that the vehicle battery is operably connected to the system, and in the logistics activated mode the processor is also operable to send the communications message from the output, so as to transmit vehicle data to off-board the vehicle.

When in the logistics activated mode, the system may be operable to activate at least one of the vehicle sensors. This ensures that vehicle data is collected when the vehicle engine is switched on, but that they do not drain the battery when the engine is switched off.

In some embodiments, the vehicle data includes location data relating to a current location of the vehicle, the one or more vehicle sensors including a location data antenna for receiving the location data, and the input including a position data input arranged to receive the location data from the location data antenna. This is advantageous to allow geographical location of the vehicle to be tracked, particularly during a logistics stage of the vehicle's life-cycle when the vehicle engine is normally switched off. The location data antenna may include a GPS or other positioning system antenna, and the position data input may include a GPS or other positioning data receiver.

In some embodiments the vehicle data includes quality data relating to one or more vehicle features, the one or more vehicle sensors including one or more quality data sensors for measuring the quality data, and the input including a quality data input arranged to receive the quality data from the quality data sensors. This advantageously allows the status of various vehicle functions to be monitored and for problems to be highlighted, particularly during a logistics stage of the vehicle's life-cycle, when such information is not normally available.

The vehicle may include one or more electronic control units, with the quality data input being arranged to receive the quality data from the quality data sensors via the electronic control units. In addition, the electronic control units may process the quality data received from the quality data sensors before the quality data is received by the quality data input. This advantageously allows conclusions relating to the received quality data to be sent to the telematics control system. For example, the electronic control units may send Diagnostic Trouble Codes if there is a problem detected with one or more of the vehicle functions.

The vehicle may include a controller area network or other vehicle network infrastructure, wherein the system communicates with the electronic control units via the controller area network or other vehicle network infrastructure. The quality data may include at least one of data indicative of at least one of the vehicle battery voltage level or state of charge, the amount of fuel in the vehicle, the odometer value, the oil level, the brake fluid level, and a tyre pressure of one or more tyres of the vehicle. It will be appreciated that this list is non-exhaustive.

In some embodiments the vehicle includes a wireless transmitting antenna, and the output includes a wireless transmitter arranged to transmit the communications message to off-board the vehicle via the wireless transmitting antenna. This advantageously allows vehicle data to be monitored and/or further processed off-board the vehicle, to be used to rectify problems or report the progress of the vehicle.

The vehicle may include a vehicle engine, where the processor determines that the vehicle battery is operably connected to the system when the vehicle ignition is switched on.

In some embodiments the vehicle includes a wireless receiving antenna arranged to receive a communications message from off-board the vehicle with instructions to be carried out by the processor. In such embodiments the input includes a wireless receiver arranged to receive the communications message from the wireless receiving antenna, and the processor is arranged to process the instructions received by the wireless receiver. This allows the vehicle to receive instructions from off-board the vehicle with strategies to, for example, rectify problems highlighted in the received vehicle data. The output may include a quality data output arranged to send the processed instructions to one or more of the electronic control units, so that they may carry out the instructions. The processed instructions may include instructions for at least one of the electronic control units to perform at least one of a diagnostics check, a software update, a tyre pressure adjustment, a vehicle engine performance assessment, and an instruction to place the vehicle engine into a safe mode. This could help to save time at the end of the logistics stage by solving problems associated with the vehicle before it is delivered to, for example, a dealership or an end user.

The processor may be operable to assess the performance of the vehicle engine and/or to perform a diagnostics check. The processor may be operable to send control signals to rectify a detected problem with the vehicle engine. This would allow the vehicle to rectify problems identified in the received vehicle data without sending the data off-board the vehicle.

The system includes a system battery, wherein the system battery is arranged to power the system when the vehicle battery is not operably connected to the system. This advantageously allows the system to remain operable to receive and/or transmit vehicle data when the vehicle battery is not operably connected to the system (including when the vehicle engine is switched off). The system may be arranged to draw no power from the system battery when the vehicle battery is operably connected to the system and/or to recharge when the vehicle battery is operably connected to the system. This advantageously makes optimum use of the power available to the system at any given time.

When the system is operating in the logistics quiet mode, it may check periodically whether any wireless messages have been received. These periodic checks may occur at predetermined intervals of time. Again, this ensures that battery power is not wasted. When it is determined that wireless messages have been received, the processor may be operable to switch from the logistics quiet mode to the logistics activated mode. The system may be arranged to draw power from the vehicle battery and/or the system battery such that the power consumption is below a predetermined level. In this regard, the system may be arranged to remain operable while utilising the vehicle battery and/or system battery in order to substantially minimise the power consumption.

In some embodiments the system is arranged to operate in the logistics activated mode for a predetermined period after it is determined that the vehicle battery is not operably connected to the system. In embodiments, the system is arranged to operate in the logistics activated mode after it is determined that the vehicle battery is not operably connected to the system, for a period sufficient to ensure establishment of a communications connection. This may be so that the vehicle can continue to try to send and/or receive messages in an area with poor network coverage, and may also or alternatively be until the battery power reaches a predetermined level.

According to another aspect of the present invention, there is provided a telematics control method according to claim 9.

According to an example of the disclosure, there is provided a non-transitory, computer-readable storage medium storing instructions thereon that when executed by one or more processors causes the one or more processors to carry out the method outlined herein.

According to an example of the disclosure, there is provided a vehicle comprising a system as outlined herein.

### BRIEF DESCRIPTION OF THE DRAWINGS

One or more embodiments of the invention will now be described, by way of example only, with reference to the accompanying figures, in which:
Figure 1 is a schematic overview of a vehicle provided with a telematics control unit (TCU) according to an embodiment of the present invention;
Figure 2 is a schematic diagram of the TCU in Figure 1;
Figure 3 is a schematic diagram showing the inputs to and outputs from a logistics management system (LMS) according to an embodiment of the present invention.

### DETAILED DESCRIPTION

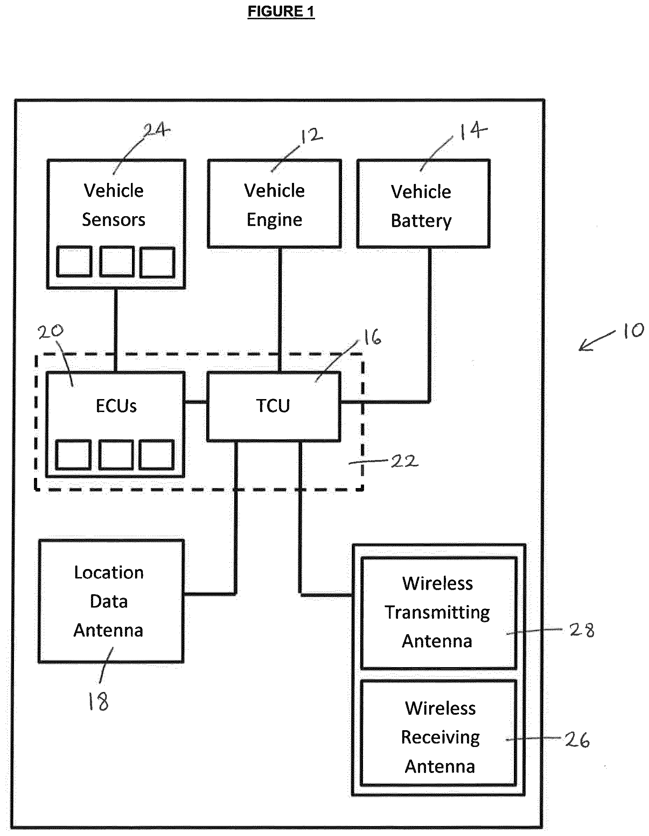

Figure 1 shows one embodiment of a vehicle 10 with a vehicle engine 12 and a vehicle battery 14, the vehicle 10 also including a telematics control unit (TCU) or telematics control system 16 for carrying out a method according to an aspect of the present invention. In addition, the vehicle 10 includes a vehicle location data antenna or sensor 18 for receiving location data relating to the current location of the vehicle 10. For example, the location data antenna 18 may be a Global Positioning System (GPS) antenna for receiving signals from a GPS satellite, or could be compound, multiple or substitutable antennas for receiving from other positioning systems such as GLONASS, BeiDou or Galileo. The TCU 16 is in communication with one or more other electronic control units (ECUs) 20 via a controller area network (CAN) 22, or other vehicle network infrastructure such as TT Ethernet or Flexray. For example, the ECUs 20 may be for monitoring and/or controlling so-called vehicle features. These vehicle features may include the vehicle battery voltage or state of charge, the tyre pressure, the status of doors or windows, odometer, brake fluid level, oil level, break pad wear, and the fuel tank level. Data about said features could be in the form of either direct measurements, e.g. fuel remaining in litres, or alerts that are sent if a measurement falls outside a given threshold, e.g. battery state of charge < 70%. Data may also be sent from other ECUs where logic in those ECUs have processed data and determined that there is some important condition such as a malfunction that could then be communicated off car in the form of a Diagnostic Trouble Code and potentially additional diagnostic information pertaining to the error. In particular, the ECUs 20 are connected to one or more so-called vehicle quality data sensors 24 arranged to measure data relating to these (and/or other) vehicle features. It will be understood that this list is nonlimiting. The ECUs 20 communicate via the CAN, or other vehicle network infrastructure, 22 with the TCU 16 with sensor output data relating to the measured values of the one or more vehicle features. This sensor output data is referred to as vehicle quality data. The ECUs 20 may process the received quality data before sending it to the TCU 16. For example, the ECUs 20 may send information relating to the quality data, or conclusions about the quality data, such as Diagnostic Trouble Codes. This is also to be considered as quality data.

The vehicle 10 also includes a wireless communication receiving antenna 26 for receiving wireless signals from off-board the vehicle 10. In addition, the vehicle 10 may also include a wireless communication transmitting antenna 28 for sending wireless signals to off-board the vehicle 10. In practice, the wireless communication antennas 26, 28 may be a single unit wireless communication transceiver antenna 26, 28. The type of wireless communication may be any that are currently available, e.g. GSM, GPRS, Wi-Fi, WiMax or LTE, or any that are available in future such as the planned 5G.

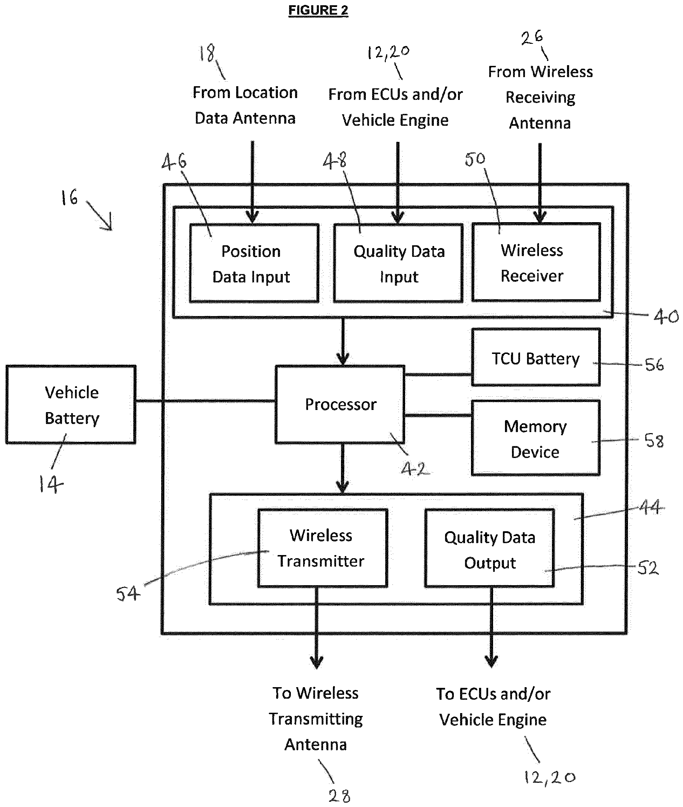

With reference to Figure 2, the TCU 16 includes an input 40, a processor 42 and an output 44. The input 40 may include: a position data input 46 for receiving vehicle location data from the vehicle location data antenna 18, a quality data input 48 for receiving quality data from the ECUs 20 via the CAN or other vehicle network infrastructure 22, and a wireless TCU receiver (or system receiver) 50 for receiving wireless messages from the wireless receiving antenna 26. Note that the position data input 46 (e.g. a GPS receiver) is part of the TCU 16. The output 44 may include: a quality data output 52 for sending instructions from the processor 42 to the ECUs 20 via the vehicle network 22, and a wireless TCU transmitter (or system transmitter) 54 for transmitting wireless communications messages indicative of the received position and/or quality data to off-board the vehicle 10 via the wireless transmitting antenna 28. In practice, the TCU receiver 50 and the TCU transmitter 54 may be a single unit wireless TCU transceiver 50, 54.

The term "vehicle data" may be used to refer individually or collectively to the vehicle location data and the vehicle quality or diagnostic data. In addition, the vehicle data may include other types of data associated with the vehicle 10. Similarly, the position data input 46 and quality data input 48 may be referred to individually or collectively simply by "vehicle data inputs 46, 48".

The TCU 16 is powered by the vehicle battery 14 when the vehicle battery 14 is operably connected to the TCU 16 (e.g. when the vehicle ignition or the vehicle engine 12 is switched on). Specifically the TCU 16 includes a logistics activated mode in which it is operable to transmit and/or receive communications messages, and a logistics quiet mode in which it draws no power from the vehicle battery 14. In the logistics activated mode, the TCU 16 is operable to activate one or more of the vehicle sensors 24.

The TCU 16 is operable in a logistics mode during at least part of a logistics stage of the vehicle's lifecycle. By "logistics stage" is meant substantially from the point that the vehicle 10 is manufactured/completed at a factory to substantially the point at which the vehicle 10 is delivered to a dealer or is otherwise at a point-of-sale/ready to be used by an end user. The logistics mode is operable to perform the functions described herein during the logistics stage, and may be disabled/switched off by a dealer upon a vehicle arriving at a dealership (i.e. at the end of the logistics stage). Alternatively, the logistics mode may be switched off at a vehicle's pre-delivery inspection. Clearly, the engine of a vehicle will be switched off for most of the time during the logistics stage, and the vehicle battery 14 may be disconnected so as to preclude any possibility of battery drain.

The logistics stage typically lasts around one month, although this duration may be longer or shorter. This means that standard location tracking devices (with positional/GPS receivers) do not have sufficient battery life in order to track the location of the vehicle from the factory to the dealership. This also means that previously considered on-the-road telematics systems are unsuitable for such a purpose, as they are usually employed to constantly send large amounts of data off-vehicle during normal use by the end user, which uses significant amounts of power. Hence in current systems there are usually no signals being sent off-board the vehicle during the logistics stage. In contrast, in accordance with embodiments of the present invention, the TCU 16 manages the use of the vehicle battery 14 so that it remains operable (to send and receive messages) at key points throughout the logistics stage. This is achieved by utilising the one or more occasions in which the vehicle ignition is switched on during the logistics stage. For example, regulations may demand that the vehicle engine 12 needs to be switched on 30, 60 and/or 90 days after the vehicle 10 has been manufactured. Also, the vehicle 10 may need to be driven short distances (e.g. from manufacturing plant to transporter, from transporter to exit port loading area, from exit port loading area into container, from container to entry port loading area, from entry port loading area to transporter, from transporter to National Sales Company or distribution depot, from distribution depot to dealership etc.) during transportation to a dealership.

Normally, the vehicle battery 14 is disconnected by a power disconnect relay during the logistics stage; however, it is reconnected when the vehicle engine 12 needs to be switched on/the ignition is started (e.g. in the scenarios mentioned above). The processor 42 is arranged to determine whether the TCU 16 is operably connected to the vehicle battery 14 (which occurs when the ignition is switched on). In particular, the processor 42 is arranged to switch from the logistics quiet mode to the logistics activated mode when it is determined that the TCU 16 is operably connected to the vehicle battery 14. Specifically, upon it being determined that the TCU 16 is operably connected to the vehicle battery 14, the vehicle data inputs 30, 32 collect vehicle data from the ECUs 20 (which collect data from the vehicle sensors 24) and the location data antenna 18.

In practice, the TCU 16 may collect vehicle data from the point at which the vehicle engine 12 or ignition is switched on until substantially when the engine 12 is switched off or until a predetermined period after the engine 12 is switched off. Typically, the TCU 16 may continue to operate after the vehicle engine 12 has been switched off only for long enough to ensure it may establish a communications connection of some sort, such as to obtain a GPS or other location lock, establish a GPRS or other mobile network connection, and/or send the vehicle data off-board the vehicle 10. These actions may be performed so long as the period of time needed to carry them out does not exceed a pre-determined period, or the TCU battery 56 is not depleted below a certain level designed to protect the life of the battery. For example, in the event that the vehicle 10 is in a location where no mobile network coverage is available, it will not be able to send the vehicle data to off-board the vehicle 10, and hence it will automatically switch to the logistics quiet mode once that pre-determined time period or state of TCU battery charge has been reached. Note that the TCU battery 56 may comprise multiple batteries that are either rechargeable (e.g. being recharged by the vehicle 10 when the vehicle engine 12 is switched on), or non-rechargeable for use in the event that the TCU internal rechargeable battery 56 is fully consumed.

In addition, the wireless transmitter 54 sends the vehicle data off-board the vehicle 10 for processing via wireless signals (as is discussed below), and also receives wireless signals including data to be communicated to the ECUs 20 (also as discussed below). Since the TCU 16 may operate in the logistics quiet mode either all or most of the time that the ignition is switched off, it does not drain the power of the vehicle battery 14 during the logistics stage, but is still able to collect and send data off-board the vehicle 10 during this period. In one embodiment, use of the TCU 16 may be prohibited unless the ignition is on, to ensure that no draining of the vehicle battery takes place. Such prohibition may be for the entire logistics stage, or for certain parts of it, for example for a period of a delivery journey where it is expected that no communications with the vehicle will be possible.

The TCU 16 also includes a TCU battery or system battery 56. The TCU battery 56 is operable when the vehicle battery 14 is not operably connected to the TCU 16. Specifically, the TCU battery 56 may be operable when the TCU 16 is operating in the logistics quiet mode, and causes the TCU 16 to activate (i.e. to switch to the logistics activated mode). This means that the system can for instance be switched to the logistics activated mode without use of the vehicle battery 14. Thus in turn, vehicle sensors 24 can be activated, and/or communications messages transmitted and/or received while still drawing no power from the vehicle battery 14.

The activation of the TCU 16 via the TCU battery 56 may be carried out periodically, for example, at predetermined time intervals to check whether the wireless receiver 50 has received any wireless messages. This may involve connecting to a network such as a Short Message Service (SMS) network upon waking up. If messages have been received then the TCU 16 operates in the logistics activated mode so as to process the received messages. The number of such activations between ignition-on events may be limited, in order that the battery life of the TCU battery 56 may be preserved.

Note that the instructions from any received wireless messages may instruct the TCU 16 to carry out one or more of a number of tasks. For example, any of the activities or tasks described herein which are carried out by, prompted by, scheduled for or assigned to the TCU 16 may also be prompted for action by a received message. For example, the received message may instruct the TCU 16 to collect vehicle data immediately, or to collect a certain type of vehicle data. The instructions may require the TCU 16 to re-activate again after a given period of time. The instructions may require a task related to a diagnostic check, as described in more detail below, such as extinguishing a cabin light which has been left on, draining the battery 14.

The inclusion of the TCU battery 56 (in addition to the vehicle battery 14) means that the TCU 16 may be operable even when the vehicle engine 12 is not switched on, but without draining the vehicle battery 14. This is particularly advantageous in cases where extended periods of time pass without the vehicle engine 12 being switched on. Also, the TCU battery 56 may recharge when the vehicle engine 12 is switched on (i.e. when the vehicle battery 14 is operably connected to the TCU 16) so that it may remain charged for the duration of the logistics stage.

The vehicle battery 14 and the TCU battery 56 may be arranged to operate at times different to those described above. For example, the batteries 14, 56 may be configured to operate in relation to the status of the vehicle engine 12 (i.e. on or off) such that overall power consumption is minimised or below a predetermined threshold. For example, it may be that use of the TCU battery 56, even in the low power consumption modes described herein, is limited to consumption below the threshold. This may be to ensure that a minimum level of TCU battery is available. The level of tasks assigned to the logistics modes may also be managed in dependence on the level of remaining battery; for example, it may be that once power consumption reaches an interim threshold, certain logistics tasks may be postponed, in favour of maintaining a minimum logistics output, such as at least monitoring the location of the vehicle.

In another example employed in embodiments of the invention, use of the vehicle battery 14 may be allowed in conjunction with the use of the TCU battery 56 until a certain level of consumption of the vehicle battery, at which point only use of the TCU battery will be permitted.

The TCU 16 may further include a memory device 58 that is in communication with the processor 42. In particular, the memory device 58 may have instructions stored therein and the processor 42 is arranged to access the stored instructions in order that it may perform the functions described above.

In the described embodiment, the present system may be used to track the progress of a vehicle as it is transported from a factory to a dealership. For example, the TCU 16 or broader system connected to the TCU 16 via the wireless network may be configured to create Geo-fences to define ports of countries, depots, factories, and/or dealerships. Since the position data input 46 receives the geographical location of the vehicle 10 and the TCU 16 or broader system knows the Geo-fences, it may be determined when the vehicle 10 has, for example, arrived at a port in a particular country. Off-board the vehicle 10, a person or party may be notified automatically that the vehicle 10 has entered a particular Geo-fence in order that they may then take an action. Actions could include liaising with service engineers to verify the physical state of the vehicle 10 or triggering other processes such as invoicing where such invoicing may not be permitted until the vehicle 10 has arrived on foreign soil.

The TCU 16 may have internal buffers which would allow messages that are due to be sent to be stored temporarily in the case of a loss of wireless connection, or an inability to obtain a wireless connection during a particular engine on/off cycle. Once the TCU 16 can 'attach' the messages are sent. This would also allow messages to be received when the TCU 16 is operating in the logistics quiet mode, and stored until it switches to the logistics activated mode. The TCU 16 will acknowledge when a message is received.

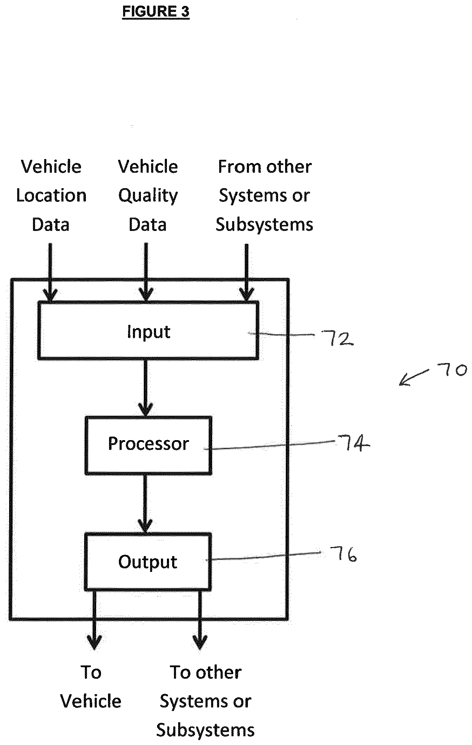

The present embodiment describes a case in which the wireless transmitter 54 sends the vehicle data off-board the vehicle 10 to a vehicle managing organisation. This organisation may be an Original Equipment Manufacturer (OEM) of the vehicle 10. In particular, and with reference to Figure 3, the vehicle data is sent to a Logistics Management System (LMS) 70 of an OEM. The LMS 70 includes an LMS input 72, an LMS processor 74, and an LMS output 76. The input 72 may include location and quality data, which in turn may include measurements, alerts, and diagnostic data.

The LMS input 72 is arranged to receive wireless signals relating to the vehicle data described above. The wireless signals may be sent from the vehicle 10 via a wireless communication provider to the LMS 70. The wireless communication provider may be a mobile network operator. The LMS processor 74 of the LMS 70 analyses the received vehicle data so that the LMS output 76 may send signals to various other systems and subsystems either to trigger further processes (for example, as a consequence of the vehicle 10 reaching a certain stage in its journey as determined by a particular Geo-fence), or to provide them with up-to-date information relating to the vehicle 10.

For example, in the above-described case in which the TCU 16 uses Geo-fences to determine that the vehicle 10 has arrived in a particular country, this information may be processed by the LMS 70 and automatically communicated to, for example, an inventory management system of the OEM responsible for tracking and managing movement of a vehicle fleet and/or stock control. In current systems, such information would need to be entered manually into such an inventory management system. As mentioned previously, this would result in poor data quality, delay in propagating the updated data to adjacent processes, and poor data reliability.

Alternatively, or in addition, the vehicle data processed by the processor 74 may be sent to a finance system of the OEM. Again, the up-to-date positional data sent from the vehicle 10 may be used to inform such a finance system when, for example, a vehicle has reached its revenue recognition point (e.g. a third party dealership). It may be the case that the OEM cannot send an invoice to the third party for the vehicle until the vehicle has been delivered to the third party dealership, or until it has arrived on foreign soil where a National Sales Company may take delivery. In this case, rather than waiting and relying for the third party to report safe delivery of the vehicle, the OEM can use the received vehicle data to invoice the third party as soon as the vehicle is delivered. This eases cash flow problems introduced by poor communication by the third party (e.g. failure to manually update a system to report vehicle delivery).

As well as using the received positional data, the LMS 70 may process the received quality data to communicate the status of certain vehicle features to, for example, a logistics service provider (LSP). The LMS 70 may communicate to the LSP that, for example, any of the vehicle battery voltage level or state of charge, the tyre pressure level, the fuel level, or the oil level is below a desired threshold, or that the vehicle engine 12 has/has not had its mandatory 30, 60 and/or 90 day switch on. This could allow the LSP to take corrective action in a timely manner. The received positional data could also be sent to the LSP to allow the LSP to monitor the quality of service they are providing (e.g. are vehicles being delivered on time?), or to track the vehicle throughout a journey or the entire logistics stage.

The LMS 70 may not simply process received data to send information to the above-mentioned systems. Instead, the LMS 70 may transmit wireless messages to (and/or back, via the wireless communication provider, to) the vehicle 10 to, for example, rectify any problems reported in the received vehicle data. This may include scheduling a diagnostics check for one of the ECUs 20 that reported a problem in the quality data. The TCU 16 would then be responsible for instructing such a diagnostics check. The LMS 70 may also be able to instruct the TCU 16 to, for example, alter the tyre pressure automatically via a central tyre inflation system. Alternatively, the TCU processor 42 may be arranged to process the received quality data and so could, for example, schedule a diagnostics check for a particular ECU 20, obtain more detailed diagnostic information from that or related ECUs for sending off-board the vehicle for further analysis, or automatically send a control signal to alter tyre pressure without needing to send the vehicle data off-board the vehicle 10.

The processor 42 may also be operable to assess the performance of the vehicle engine 12 when the engine is switched on. During this period the processor 42 may be arranged to diagnose issues such as faulty engine components. Further, the processor 42 may be operable to send control signals to the vehicle engine such that, for example, it is placed into a safe mode in the event that faults are detected. The processor 42 may also be operable to transmit a communications message via the wireless transmitter 54 to off-board the vehicle 10 to, for example, book a service and potentially specify the activities to be undertaken or the parts to be inspected or replaced in the event that faults are detected. This could minimise delays in delivering a fully-functioning vehicle to an end user.

The TCU 16 may also be able to download software updates via the wireless communication antenna 26. Such software updates may be downloaded from the LMS 70 or elsewhere. This may enable the TCU 16 to collect different types of data, or to automatically process data received from other parts of the car to perform new functions for automation, diagnostics, or prognostics.

As mentioned above, the logistics mode of the TCU 16 may be switched off at the end of the logistics stage (e.g. when the vehicle reaches a dealership); however, it is possible that it may be switched back on at a future date. This could be of use in the case of, for example, a recall of the vehicle 10 by the manufacturer.

The TCU 16 may have modes other than the logistics mode described in the above for use at times other than the logistics stage. These may include, for example, an emergency mode for communicating a vehicle accident, a breakdown assistance mode, and/or a stolen vehicle tracking mode. Different modes of operation may be enabled at the same time. The TCU 16 is hence a flexible application platform that may be used to provide different services at different times or in different circumstances during the life-cycle of the vehicle 10 depending on the data received by the unit either from sensors in the vehicle or from off-board wireless communication.

The wireless communication of the vehicle data in the above could be sent to a central repository in the cloud that may be accessed by different suppliers, which advantageously means that consistent information could be readily available to various organisations.

## Claims

1. A telematics control system (16) for use in a vehicle (10) and operable during a logistics stage of the vehicle from manufacture of the vehicle (10) up to a time where the vehicle (10) is ready to be used by an end user, the system being operable during the logistics stage of the vehicle (10) to determine whether to transmit vehicle data to off-board the vehicle (10), the vehicle (10) including a vehicle battery (14) and one or more vehicle sensors (24), and the system (16) comprising:
an input (40) arranged to receive vehicle data from at least one of the on-board vehicle sensors (24);
a processor (42) arranged to determine whether the vehicle battery (14) is operably connected to the system (16); and
an output (44) arranged to transmit a wireless communications message indicative of the received vehicle data to off-board the vehicle (10);
a system battery (56), wherein the system battery (56) is arranged to power the system (16) when the vehicle battery (14) is not operably connected to the system (16);
wherein the system (16) includes a logistics activated mode in which it is operable to transmit communications messages and a logistics quiet mode in which it draws no power from the vehicle battery (14),
and wherein, during the logistics stage, the processor (42) is operable to switch from the logistics quiet mode to the logistics activated mode when it determines that the vehicle battery (14) is operably connected to the system (16) in the event that an ignition of the vehicle has been switched on, and in the logistics activated mode to send the communications message from the output (44) to a logistics management system and/or a logistics service provider, so as to transmit vehicle data to off-board the vehicle (10); and
wherein the system (16) is arranged to operate in the logistics activated mode for a predetermined period after it is determined that the vehicle battery (14) is not operably connected to the system (16), and/or after it is determined that the vehicle battery is not operably connected to the system, operate in the logistics activated mode for a period sufficient to ensure establishment of a communications connection.

2. A system (16) according to claim 1, comprising:
a memory device (58) in communication with the processor (42) and having instructions stored therein;
wherein the processor (42) is arranged to access the memory device (58) and execute the instructions stored therein such that the processor (42) is operable to determine whether the vehicle battery (14) is operably connected to the system (16), to switch from the logistics quiet mode to the logistics activated mode when it determines that the vehicle battery (14) is operably connected to the system (16), and in the logistics activated mode to send the communications message from the output (44) to a logistics management system and/or a logistics service provider, so as to transmit vehicle data to off-board the vehicle (10).

3. A system (16) according to claim 1 or claim 2, wherein, when in the logistics activated mode, the system (16) is operable to activate at least one of the vehicle sensors (24).

4. A system (16) according to any of claims 1 to 3 wherein the system (16) is operably connected to a vehicle engine (12), and wherein the processor (42) is operable to assess the performance of the vehicle engine (12) and/or to perform a diagnostics check, optionally the processor (42) being operable to send control signals to rectify a detected problem with the vehicle engine (12).

5. A system (16) according to any preceding claim, wherein the system (16) is arranged to draw no power from the system battery (56) when the vehicle battery (14) is operably connected to the system (16).

6. A system (16) according to claim 5, wherein the system battery (56) is arranged to recharge when the vehicle battery (14) is operably connected to the system (16).

7. A system (16) according to claim 5 or claim 6, wherein when the system (16) is operating in the logistics quiet mode to check periodically whether any wireless messages have been received, optionally when it is determined that wireless messages have been received, the processor (42) is operable to switch from the logistics quiet mode to the logistics activated mode.

8. A system (16) according to any of claims 5 to 7, wherein the system (16) is arranged to draw power from the vehicle battery (14) and/or the system battery (56) such that the power consumption is below a predetermined level, optionally the system (16) is arranged to remain operable while utilising the vehicle battery (14) and/or system battery (56) in order to substantially minimise the power consumption.

9. A telematics control method for use with a vehicle (10) and operable during a logistic stage of the vehicle from manufacture of the vehicle (10) up to a time where the vehicle (10) is ready to be used by an end user, the vehicle including a vehicle battery (14), one or more vehicle sensors (24) and a telematics control system (16), the method comprising:
receiving vehicle data from at least one of the on-board vehicle sensors (24);
determining whether the vehicle battery (14) is operably connected to the system (16); and
transmitting a wireless communications message indicative of the received vehicle data to off-board the vehicle (10);
wherein the system (16) includes a logistics activated mode in which it is operable to transmit communications messages and a logistics quiet mode in which it draws no power from the vehicle battery (14),
wherein the method includes: switching the system, during the logistics stage, from the logistics quiet mode to the logistics activated mode when it is determined that the vehicle battery (14) is operably connected to the system (16) in the event that an ignition of the vehicle has been switched on, and in the logistics activated mode to send the communications message, so as to transmit vehicle data to off-board the vehicle (10);
transmitting the communications message to a logistics management system and/or a logistics service provider; and
operating in the logistics activated mode for a predetermined period after it is determined that the vehicle battery (14) is not operably connected to the system (16), and/or after it is determined that the vehicle battery is not operably connected to the system, operating in the logistics activated mode for a period sufficient to ensure establishment of a communications connection.

10. A non-transitory, computer-readable storage medium storing instructions thereon that when executed by the processor of the system of claim 1, causes the system to carry out the method of claim 9.

11. A vehicle (10) comprising a system according to any of claims 1 to 8.

12. A vehicle (10) according to claim 11, wherein:
the vehicle data includes location data relating to a current location of the vehicle (10);
the one or more vehicle sensors (24) includes a location data antenna (18) for receiving the location data; and
the input (40) includes a position data input (46) arranged to receive the location data from the location data antenna (18), optionally the location data antenna (18) includes a GPS or other positioning system antenna and the position data input (46) includes a GPS or other positioning data receiver.

13. A vehicle (10) according to claim 11 or claim 12 wherein:
the vehicle data includes quality data relating to one or more vehicle features;
the one or more vehicle sensors (24) includes one or more quality data sensors for measuring the quality data; and
the input (40) includes a quality data input (48) arranged to receive the quality data from the quality data sensors, optionally the vehicle (10) including one or more electronic control units (20), and the quality data input (48) being arranged to receive the quality data from the quality data sensors via the electronic control units (20), and the electronic control units (20) process the quality data received from the quality data sensors before the quality data is received by the quality data input (20).

14. A vehicle (10) according to any of claims 11 to 13, the vehicle (10) comprising:
a wireless transmitting antenna (28); and the output (44) includes a wireless transmitter (54) arranged to transmit the communications message to off-board the vehicle (10) via the wireless transmitting antenna (28), and/or
a vehicle engine (12); and the processor (42) determines that the vehicle battery (14) is operably connected to the system (16) when the vehicle engine (12) or ignition is switched on, and/or
a wireless receiving antenna (26) arranged to receive a communications message from off-board the vehicle (10) with instructions to be carried out by the processor (42); the input (40) includes a wireless receiver (50) arranged to receive the communications message from the wireless receiving antenna (26); and the processor (42) is arranged to process the instructions received by the wireless receiver (50).

## Patentansprüche

1. Telematiksteuerungssystem (16) zur Verwendung in einem Fahrzeug (10), das während einer Logistikphase des Fahrzeugs von der Herstellung des Fahrzeugs (10) bis zu einem Zeitpunkt betreibbar ist, zu dem das Fahrzeug (10) bereit ist, von einem Endbenutzer benutzt zu werden, wobei das System während der Logistikphase des Fahrzeugs (10) betreibbar ist, um zu bestimmen, ob Fahrzeugdaten an außerhalb des Fahrzeugs (10) übertragen werden sollen, wobei das Fahrzeug (10) eine Fahrzeugbatterie (14) und einen oder mehrere Fahrzeugsensoren (24) einschließt, und das System (16) Folgendes umfasst:
einen Eingang (40), der eingerichtet ist, um Fahrzeugdaten von mindestens einem der bordeigenen Fahrzeugsensoren (24) zu empfangen;
einen Prozessor (42), der eingerichtet ist, um zu bestimmen, ob die Fahrzeugbatterie (14) betriebsfähig mit dem System (16) verbunden ist; und
einen Ausgang (44), der eingerichtet ist, um eine drahtlose Kommunikationsnachricht, die die empfangenen Fahrzeugdaten angibt, an außerhalb des Fahrzeugs (10) zu übertragen;
eine Systembatterie (56), wobei die Systembatterie (56) eingerichtet ist, um das System (16) zu versorgen, wenn die Fahrzeugbatterie (14) nicht betriebsfähig mit dem System (16) verbunden ist;
wobei das System (16) einen aktivierten Logistikmodus einschließt, in dem es betreibbar ist, um Kommunikationsnachrichten zu übertragen, und einen ruhigen Logistikmodus, in dem es keine Leistung von der Fahrzeugbatterie (14) zieht,
und wobei der Prozessor (42) während der Logistikphase betreibbar ist, um von dem ruhigen Logistikmodus in den aktivierten Logistikmodus umzuschalten, wenn er bestimmt, dass die Fahrzeugbatterie (14) betriebsfähig mit dem System (16) verbunden ist, falls eine Zündung des Fahrzeugs eingeschaltet wurde, und im aktivierten Logistikmodus die Kommunikationsnachricht von dem Ausgang (44) an ein Logistikmanagementsystem und/oder einen Logistikdienstleister zu senden, um Fahrzeugdaten an außerhalb des Fahrzeugs (10) zu übertragen; und
wobei das System (16) eingerichtet ist, um für eine vorbestimmte Zeitspanne im aktivierten Logistikmodus zu arbeiten, nachdem bestimmt wurde, dass die Fahrzeugbatterie (14) nicht betriebsfähig mit dem System (16) verbunden ist, und/oder nachdem bestimmt wurde, dass die Fahrzeugbatterie nicht betriebsfähig mit dem System verbunden ist, für eine Zeitspanne im aktivierten Logistikmodus zu arbeiten, die ausreicht, um den Aufbau einer Kommunikationsverbindung sicherzustellen.

2. System (16) nach Anspruch 1, umfassend:
eine Speichervorrichtung (58), die mit dem Prozessor (42) in Kommunikationsverbindung steht und darin gespeicherte Anweisungen aufweist,
wobei der Prozessor (42) eingerichtet ist, um auf die Speichervorrichtung (58) zuzugreifen und die darin gespeicherten Anweisungen derart auszuführen, dass der Prozessor (42) betreibbar ist, um zu bestimmen, ob die Fahrzeugbatterie (14) betriebsfähig mit dem System (16) verbunden ist, um von dem ruhigen Logistikmodus in den aktivierten Logistikmodus umzuschalten, wenn er bestimmt, dass die Fahrzeugbatterie (14) betriebsfähig mit dem System (16) verbunden ist, und um im aktivierten Logistikmodus die Kommunikationsnachricht von dem Ausgang (44) an ein Logistikmanagementsystem und/oder einen Logistikdienstleister zu senden, um Fahrzeugdaten an Stellen außerhalb des Fahrzeugs (10) zu übertragen.

3. System (16) nach Anspruch 1 oder 2, wobei das System (16), wenn es sich im aktivierten Logistikmodus befindet, betreibbar ist, um mindestens einen der Fahrzeugsensoren (24) zu aktivieren.

4. System (16) nach einem der Ansprüche 1 bis 3, wobei das System (16) betriebsfähig mit einem Fahrzeugmotor (12) verbunden ist, und wobei der Prozessor (42) betreibbar ist, um die Leistung des Fahrzeugmotors (12) zu bewerten und/oder eine Diagnoseprüfung durchzuführen, wobei der Prozessor (42) optional betreibbar ist, um Steuersignale zu senden, um ein erkanntes Problem mit dem Fahrzeugmotor (12) zu beheben.

5. System (16) nach einem der vorstehenden Ansprüche, wobei das System (16) eingerichtet ist, um keine Leistung von der Systembatterie (56) zu ziehen, wenn die Fahrzeugbatterie (14) betriebsfähig mit dem System (16) verbunden ist.

6. System (16) nach Anspruch 5, wobei die Systembatterie (56) eingerichtet ist, um wieder aufgeladen zu werden, wenn die Fahrzeugbatterie (14) betriebsfähig mit dem System (16) verbunden ist.

7. System (16) nach Anspruch 5 oder 6, wobei der Prozessor (42), wenn das System (16) im ruhigen Logistikmodus arbeitet, um periodisch zu prüfen, ob irgendwelche drahtlosen Nachrichten empfangen wurden, optional, wenn bestimmt wird, dass drahtlose Nachrichten empfangen wurden, betreibbar ist, um vom ruhigen Logistikmodus in den aktivierten Logistikmodus umzuschalten.

8. System (16) nach einem der Ansprüche 5 bis 7, wobei das System (16) eingerichtet ist, um Leistung von der Fahrzeugbatterie (14) und/oder der Systembatterie (56) zu ziehen, sodass der Leistungsverbrauch unter einem vorbestimmten Niveau liegt, wobei das System (16) optional so eingerichtet ist, dass es unter Verwendung der Fahrzeugbatterie (14) und/oder der Systembatterie (56) betreibbar bleibt, um den Leistungsverbrauch im Wesentlichen zu minimieren.

9. Telematiksteuerungsverfahren zur Verwendung mit einem Fahrzeug (10) und betreibbar während einer Logistikphase des Fahrzeugs von der Herstellung des Fahrzeugs (10) bis zu einem Zeitpunkt, zu dem das Fahrzeug (10) bereit ist, von einem Endbenutzer benutzt zu werden, wobei das Fahrzeug eine Fahrzeugbatterie (14), einen oder mehrere Fahrzeugsensoren (24) und ein Telematiksteuerungssystem (16) einschließt, wobei das Verfahren umfasst:
Empfangen von Fahrzeugdaten von mindestens einem der bordeigenen Fahrzeugsensoren (24);
Bestimmen, ob die Fahrzeugbatterie (14) betriebsfähig mit dem System (16) verbunden ist; und
Übertragen einer drahtlosen Kommunikationsnachricht, die die empfangenen Fahrzeugdaten angibt, an außerhalb des Fahrzeugs (10);
wobei das System (16) einen aktivierten Logistikmodus einschließt, in dem es betreibbar ist, um Kommunikationsnachrichten zu übertragen, und einen ruhigen Logistikmodus, in dem es keine Leistung von der Fahrzeugbatterie (14) zieht,
wobei das Verfahren einschließt: Umschalten des Systems während der Logistikphase von dem ruhigen Logistikmodus in den aktivierten Logistikmodus, wenn bestimmt wird, dass die Fahrzeugbatterie (14) betriebsfähig mit dem System (16) verbunden ist, falls eine Zündung des Fahrzeugs eingeschaltet wurde, und im aktivierten Logistikmodus Senden der Kommunikationsnachricht, um Fahrzeugdaten an außerhalb des Fahrzeugs (10) zu übertragen;
Übertragen der Kommunikationsnachricht an ein Logistikmanagementsystem und/oder einen Logistikdienstleister; und
Arbeiten in dem aktivierten Logistikmodus für eine vorbestimmte Zeitspanne, nachdem bestimmt wurde, dass die Fahrzeugbatterie (14) nicht betriebsfähig mit dem System (16) verbunden ist, und/oder nachdem bestimmt wurde, dass die Fahrzeugbatterie nicht betriebsfähig mit dem System verbunden ist, Arbeiten in dem aktivierten Logistikmodus für eine Zeitspanne, die ausreicht, um den Aufbau einer Kommunikationsverbindung sicherzustellen.

10. Nichtflüchtiges computerlesbares Speichermedium, auf dem Anweisungen gespeichert sind, die, wenn sie durch den Prozessor des Systems nach Anspruch 1 ausgeführt werden, das System veranlassen, das Verfahren nach Anspruch 9 auszuführen.

11. Fahrzeug (10), umfassend ein System nach einem der Ansprüche 1 bis 8.

12. Fahrzeug (10) nach Anspruch 11, wobei:
die Fahrzeugdaten Standortdaten einschließen, die sich auf einen aktuellen Standort des Fahrzeugs (10) beziehen;
der eine oder die mehreren Fahrzeugsensoren (24) eine Standortdatenantenne (18) zum Empfangen der Standortdaten einschließen; und
der Eingang (40) einen Positionsdateneingang (46) einschließt, der eingerichtet ist, um die Standortdaten von der Standortdatenantenne (18) zu empfangen, wobei die Standortdatenantenne (18) optional eine GPS- oder eine andere Positionierungssystemantenne einschließt und der Positionsdateneingang (46) einen GPS- oder einen anderen Positionierungsdatenempfänger einschließt.

13. Fahrzeug (10) nach Anspruch 11 oder Anspruch 12, wobei:
die Fahrzeugdaten Qualitätsdaten einschließen, die sich auf ein oder mehrere Fahrzeugmerkmale beziehen;
der eine oder die mehreren Fahrzeugsensoren (24) einen oder mehrere Qualitätsdatensensoren zum Messen der Qualitätsdaten einschließen; und
der Eingang (40) einen Qualitätsdateneingang (48) einschließt, der eingerichtet ist, um die Qualitätsdaten von den Qualitätsdatensensoren zu empfangen, wobei das Fahrzeug (10) optional eine oder mehrere elektronische Steuereinheiten (20) einschließt, und wobei der Qualitätsdateneingang (48) eingerichtet ist, um die Qualitätsdaten von den Qualitätsdatensensoren über die elektronischen Steuereinheiten (20) zu empfangen, und die elektronischen Steuereinheiten (20) die von den Qualitätsdatensensoren empfangenen Qualitätsdaten verarbeiten, bevor die Qualitätsdaten von dem Qualitätsdateneingang (20) empfangen werden.

14. Fahrzeug (10) nach einem der Ansprüche 11 bis 13, wobei das Fahrzeug (10) umfasst:
eine drahtlose Sendeantenne (28); und der Ausgang (44) schließt einen drahtlosen Sender (54) ein, der eingerichtet ist, um die Kommunikationsnachricht über die drahtlose Sendeantenne (28) an außerhalb des Fahrzeugs (10) zu übertragen, und/oder
einen Fahrzeugmotor (12); und der Prozessor (42) bestimmt, dass die Fahrzeugbatterie (14) betriebsfähig mit dem System (16) verbunden ist, wenn der Fahrzeugmotor (12) oder die Zündung eingeschaltet ist, und/oder
eine drahtlose Empfangsantenne (26), die eingerichtet ist, um eine Kommunikationsnachricht mit Anweisungen, die von dem Prozessor (42) auszuführen sind, von außerhalb des Fahrzeugs (10) zu empfangen; der Eingang (40) schließt einen drahtlosen Empfänger (50) ein, der eingerichtet ist, um die Kommunikationsnachricht von der drahtlosen Empfangsantenne (26) zu empfangen; und der Prozessor (42) ist eingerichtet, um die von dem drahtlosen Empfänger (50) empfangenen Anweisungen zu verarbeiten.

## Revendications

1. Système de commande télématique (16) destiné à être utilisé dans un véhicule (10) et pouvant fonctionner pendant une étape logistique du véhicule depuis la fabrication du véhicule (10) jusqu'à un moment où le véhicule (10) est prêt à être utilisé par un utilisateur final, le système pouvant fonctionner pendant l'étape logistique du véhicule (10) pour déterminer s'il faut transmettre des données de véhicule à l'extérieur du véhicule (10), le véhicule (10) comportant une batterie de véhicule (14) et un ou plusieurs capteurs de véhicule (24), et le système (16) comprenant :
une entrée (40) agencée pour recevoir des données de véhicule à partir d'au moins un des capteurs de véhicule embarqués (24) ;
un processeur (42) agencé pour déterminer si la batterie de véhicule (14) est connectée de manière opérationnelle au système (16) ; et
une sortie (44) agencée pour transmettre un message de communication sans fil indicatif des données de véhicule reçues à l'extérieur du véhicule (10) ;
une batterie de système (56), dans lequel la batterie de système (56) est agencée pour alimenter le système (16) lorsque la batterie de véhicule (14) n'est pas connectée de manière opérationnelle au système (16) ;
le système (16) comportant un mode logistique activé dans lequel il peut fonctionner pour transmettre des messages de communication et un mode logistique silencieux dans lequel il ne consomme aucune énergie de la batterie de véhicule (14),
et, pendant l'étape logistique, le processeur (42) pouvant fonctionner pour passer du mode logistique silencieux au mode logistique activé lorsqu'il détermine que la batterie de véhicule (14) est connectée de manière opérationnelle au système (16), dans le cas où le contact du véhicule a été mis, et dans le mode logistique activé, pour envoyer le message de communication à partir de la sortie (44) à un système de gestion logistique et/ou à un fournisseur de services logistiques, de manière à transmettre des données de véhicule à l'extérieur du véhicule (10) ; et
le système (16) étant agencé pour fonctionner dans le mode logistique activé pendant une période prédéterminée après qu'il est déterminé que la batterie de véhicule (14) n'est pas connectée de manière opérationnelle au système (16), et/ou après qu'il est déterminé que la batterie de véhicule n'est pas connectée de manière opérationnelle au système, pour fonctionner dans le mode logistique activé pendant une période suffisante pour assurer l'établissement d'une connexion de communication.

2. Système (16) selon la revendication 1, comprenant :
un dispositif de mémoire (58) en communication avec le processeur (42) et ayant des instructions stockées dans celui-ci ;
le processeur (42) étant agencé pour accéder au dispositif de mémoire (58) et exécuter les instructions stockées dans celui-ci de sorte que le processeur (42) peut fonctionner pour déterminer si la batterie de véhicule (14) est connectée de manière opérationnelle au système (16), pour passer du mode logistique silencieux au mode logistique activé lorsqu'il détermine que la batterie de véhicule (14) est connectée de manière opérationnelle au système (16), et dans le mode logistique activé, pour envoyer le message de communication à partir de la sortie (44) à un système de gestion logistique et/ou à un fournisseur de services logistiques, de manière à transmettre des données de véhicule à l'extérieur du véhicule (10).

3. Système (16) selon la revendication 1 ou la revendication 2, dans lequel, lorsqu'il est dans le mode logistique activé, le système (16) peut fonctionner pour activer au moins l'un des capteurs de véhicule (24).

4. Système (16) selon l'une quelconque des revendications 1 à 3, dans lequel le système (16) est connecté de manière opérationnelle à un moteur de véhicule (12), et le processeur (42) pouvant fonctionner pour évaluer la performance du moteur de véhicule (12) et/ou pour effectuer un contrôle de diagnostic, le processeur (42) pouvant éventuellement fonctionner pour envoyer des signaux de commande pour rectifier un problème détecté avec le moteur de véhicule (12).

5. Système (16) selon l'une quelconque des revendications précédentes, dans lequel le système (16) est agencé pour ne consommer aucune énergie de la batterie de système (56) lorsque la batterie de véhicule (14) est connectée de manière opérationnelle au système (16).

6. Système (16) selon la revendication 5, dans lequel la batterie de système (56) est agencée pour se recharger lorsque la batterie de véhicule (14) est connectée de manière opérationnelle au système (16).

7. Système (16) selon la revendication 5 ou la revendication 6, dans lequel, lorsque le système (16) fonctionne dans le mode logistique silencieux, pour vérifier périodiquement si des messages sans fil ont été reçus, éventuellement lorsqu'il est déterminé que des messages sans fil ont été reçus, le processeur (42) peut fonctionner pour passer du mode logistique silencieux au mode logistique activé.

8. Système (16) selon l'une quelconque des revendications 5 à 7, dans lequel le système (16) est agencé pour consommer de l'énergie de la batterie de véhicule (14) et/ou de la batterie de système (56) de manière à ce que la consommation d'énergie soit inférieure à un niveau prédéterminé, éventuellement le système (16) est agencé pour rester opérationnel tout en utilisant la batterie de véhicule (14) et/ou la batterie de système (56) afin de minimiser sensiblement la consommation d'énergie.

9. Procédé de commande télématique lors de son utilisation avec un véhicule (10) et pouvant fonctionner pendant une étape logistique du véhicule depuis la fabrication du véhicule (10) jusqu'à un moment où le véhicule (10) est prêt à être utilisé par un utilisateur final, le véhicule comportant une batterie de véhicule (14), un ou plusieurs capteurs de véhicule (24) et un système de commande télématique (16), le procédé comprenant :
la réception des données de véhicule à partir d'au moins un des capteurs de véhicule embarqués (24) ;
la détermination du fait de savoir si la batterie de véhicule (14) est connectée de manière opérationnelle au système (16) ; et
la transmission d'un message de communication sans fil indicatif des données de véhicule reçues à l'extérieur du véhicule (10) ;
le système (16) comportant un mode logistique activé dans lequel il peut fonctionner pour transmettre des messages de communication et un mode logistique silencieux dans lequel il ne consomme aucune énergie de la batterie de véhicule (14),
le procédé comportant : la commutation du système, pendant l'étape logistique, à partir du mode logistique silencieux vers le mode logistique activé lorsqu'il est déterminé que la batterie de véhicule (14) est connectée de manière opérationnelle au système (16) dans le cas où le contact du véhicule a été allumé, et dans le mode logistique activé pour envoyer le message de communication, de manière à transmettre des données de véhicule à l'extérieur du véhicule (10) ;
la transmission du message de communication à un système de gestion logistique et/ou à un fournisseur de services logistiques ; et
le fonctionnement dans le mode logistique activé pendant une période prédéterminée après qu'il est déterminé que la batterie de véhicule (14) n'est pas connectée de manière opérationnelle au système (16), et/ou après qu'il est déterminé que la batterie de véhicule n'est pas connectée de manière opérationnelle au système, le fonctionnement dans le mode logistique activé pendant une période suffisante pour assurer l'établissement d'une connexion de communication.

10. Support de stockage non transitoire lisible par ordinateur sur lequel sont stockées des instructions qui, lorsqu'elles sont exécutées par le processeur du système de la revendication 1, amènent le système à réaliser le procédé de la revendication 9.

11. Véhicule (10) comprenant un système selon l'une quelconque des revendications 1 à 8.

12. Véhicule (10) selon la revendication 11, dans lequel :
les données de véhicule comportent des données de localisation relatives à une localisation actuelle du véhicule (10) ;
le ou les capteurs de véhicule (24) comportent une antenne de données de localisation (18) pour recevoir les données de localisation ; et
l'entrée (40) comporte une entrée de données de position (46) agencée pour recevoir les données de localisation à partir de l'antenne de données de localisation (18), l'antenne de données de localisation (18) comporte éventuellement une antenne GPS ou une autre antenne de système de positionnement et l'entrée de données de position (46) comporte un récepteur GPS ou un autre récepteur de données de positionnement.

13. Véhicule (10) selon la revendication 11 ou la revendication 12, dans lequel :
les données de véhicule comportent des données de qualité relatives à un ou plusieurs éléments de véhicule ;
le ou les capteurs de véhicule (24) comportent un ou plusieurs capteurs de données de qualité pour mesurer les données de qualité ; et
l'entrée (40) comporte une entrée de données de qualité (48) agencée pour recevoir les données de qualité à partir des capteurs de données de qualité, le véhicule (10) comportant éventuellement une ou plusieurs unités de commande électroniques (20), et l'entrée de données de qualité (48) étant agencée pour recevoir les données de qualité à partir des capteurs de données de qualité par l'intermédiaire des unités de commande électroniques (20), et les unités de commande électroniques (20) traitent les données de qualité reçues à partir des capteurs de données de qualité avant que les données de qualité ne soient reçues par l'entrée de données de qualité (20).

14. Véhicule (10) selon l'une quelconque des revendications 11 à 13, le véhicule (10) comprenant :
une antenne de transmission sans fil (28) ; et la sortie (44) comporte un émetteur sans fil (54) agencé pour transmettre le message de communication à l'extérieur du véhicule (10) par l'intermédiaire de l'antenne de transmission sans fil (28), et/ou
un moteur de véhicule (12) ; et le processeur (42) détermine que la batterie de véhicule (14) est connectée de manière opérationnelle au système (16) lorsque le moteur de véhicule (12) est démarré ou lorsque le contact est allumé, et/ou
une antenne de réception sans fil (26) agencée pour recevoir un message de communication depuis l'extérieur du véhicule (10) avec des instructions à réaliser par le processeur (42) ; l'entrée (40) comporte un récepteur sans fil (50) agencé pour recevoir le message de communication à partir de l'antenne de réception sans fil (26) ; et le processeur (42) est agencé pour traiter les instructions reçues par le récepteur sans fil (50).
